# EUROPÄISCHE PATENTSCHRIFT

(11) **EP 0 450 646 B1**
(45) Veröffentlichungstag und Bekanntmachung des Hinweises auf die Patenterteilung: **05.07.1995**
(21) Anmeldenummer: 91105416.1
(22) Anmeldetag: 05.04.1991
(51) Int. Cl.: F16K 3/18

(54) **Doppelplattenschieber**
Double plate gate valve
Vanne à tiroir composé de deux plaques

(30) Priorität: 06.04.1990 DE 4011274
(43) Veröffentlichungstag der Anmeldung: 09.10.1991
(73) Patentinhaber: Zimmermann & Jansen GmbH, D-52322 Düren (DE)
(72) Erfinder: Genreith, Hans, W-5160 Düren (DE); Marx, Norbert, W-5160 Düren (DE); Nägler, Günter, W-5180 Eschweiler (DE)
(74) Vertreter: Popp, Eugen, Dr.

(56) Entgegenhaltungen:
- CH-A- 632 822
- DD-A- 233 402
- DE-A- 2 037 984
- DE-A- 2 713 149
- DE-C- 868 543
- DE-U- 8 008 316

## Beschreibung

Die Erfindung betrifft einen Doppelplatten schieber gemäß dem Oberbegriff des Anspruches 1 bzw. 7. Absperrschieber dieser Art sind allgemein bekannt und werden von der Anmelderin seit Jahren hergestellt und vertrieben (s. Prospekt Nr. 300, II/82 der Anmelderin mit dem Titel "Armaturen und Einrichtungen für Prozesse in Raffinerien, Petrochemie, Chemie - Programm III; sowie DE-U-80 08 316). Rohrbrückenschieber als Flach-, Oval- und Rundschieber sind sowohl in Form von Einplattenschieber als auch in Form von Doppelplattenschieber (Keil im Keil-Prinzip) bekannt, und zwar mit steigender Spindel und geradem, rohrförmigem Durchgang in Offenstellung. Im vorliegenden Fall geht es um die Weiterentwicklung eines Rohrbrückenschiebers nach Art eines Doppelplattenschiebers. Derartige Schieber kommen dann zur Anwendung, wenn in der Offenstellung des Schiebers eine Abdichtung seines Durchflußraumes gegenüber dem übrigen Gehäuseinnenraum verlangt wird. Dies ist insbesondere der Fall, wenn es sich um einen Gasstrom mit Verunreinigungen aus sublimierenden Stoffen handelt, weil diese sonst sich in nichtabgeschlossenen Gehäuseteilen anlagern und zu einer Totalverstopfung und somit zu einer Verhinderung der Schieberbetätigung führen können. Derartige Schieber werden auch aus ähnlichen Gründen bei staubhaltigen Gasen aber auch stark verschmutzten flüssigen Medien eingesetzt, z. B. in Kohlevergasungsanlagen, Verbrennungsanlagen, chemischen Anlagen, Pipelines oder dgl.

Aus der DE-C-868 543 ist ein Doppelplattenschieber bekannt geworden, dessen Rohrbrücke sich aus einem elastischen Wellrohr mit stirnseitig angeordneten Gleit- und Dichtringen zusammensetzt. Die Rohrbrücke ist in einem rohrförmigen Gehäuseteil der Schieberplatte untergebracht, welches gleichzeitig zur Halterung und Führung der Rohrbrücke dient. In der Offenstellung des Schiebers werden die Gleitringe gegen die Gehäusedichtsitze durch die Elastizität des Wellrohres sowie durch die Spreizwirkung einer Keilvorrichtung angepreßt. Diese bekannte Konstruktion hat den Nachteil, daß zur Erzielung einer ausreichend hohen Dichtigkeit die Vorspannung des elastischen Wellrohres relativ hoch eingestellt sein muß. Die Folge ist, daß beim Verschieben der Rohrbrücke deren Dichtringe mit einer relativ großen Anpreßkraft an den gegenüberliegenden Dichtsitzen des Schiebergehäuses entlanggleiten. Dadurch entsteht eine beträchtliche Reibung zwischen den anliegenden Dichtflächen, so daß erhebliche Betätigungskräfte zum Umschalten des Schiebers erforderlich sind. Zur Vermeidung dieser Nachteile wird im DE-U-80 08 316 vorgeschlagen, die Dichtringe der Rohrbrücke an einer Verlängerung der Betätigungsstange für die Schieberplatte aufzuhängen und mit einer Rückstellvorrichtung zu versehen, die an den Dichtringen befestigte Rollen aufweist, welche auf im Gehäuse angebrachten Betätigungsleisten mit im Bereich des Schieberdurchganges angeordneten Einlaufnuten für die Rollen laufen. Diese kombinierte Spreiz- und Lösevorrichtung soll zum einen eine sichere Anpressung der Dichtringe in der Offenstellung des Schiebers und zum anderen die freie Beweglichkeit der Rohrbrücke entlang der beiden Gehäusedichtsitze beim Betätigen des Schiebers gewährleisten. Zusätzlich wird noch vorgeschlagen, auch die Absperrplatten der Schieberplatte mit Rollen zu versehen, die in Schließstellung in die Einlaufnuten der Betätigungsleisten laufen, um, vor allem bei hohen Differenzdrücken, ein Verschieben der Absperrplatten mit geringstmöglicher Reibung und ohne Beschädigung der Dichtflächen zu ermöglichen. Konkret ist die Rohrbrücke aus zwei Dichtringen sowie einem die Dichtringe miteinander verbindenden Kompensator zusammengesetzt. Die Dichtringe sind so bemessen, daß ihr Durchmesser mit dem der Gehäusedichtsitze übereinstimmt. Der Kompensator besteht aus einem elastischen, wellig gebogenen Blechring, der so eingebaut ist, daß Schmutzablagerungen von selbst weggesprengt werden, wenn der Kompensator zusammengedrückt oder auseinandergedrückt wird. Die Dichtringe werden in der Offenstellung des Schiebers mittels einer Keilvorrichtung aufgespreizt, die zwei im Schiebergehäuse ortsfest und seitlich angeordnete Gehäuseteile aufweist, welche in der Offenstellung des Schiebers mit je zwei an den Dichtringen angebrachten Plattenkeilen zusammenwirken. Die Rohrbrücke weist ferner eine Rückstellvorrichtung mit je vier Rollen auf, die an den Dichtringen seitlich und paarweise symmetrisch zu deren Mittelachse befestigt sind. Die Rollen laufen auf vier im Schiebergehäuse angebrachten Betätigungsleisten, welche im Bereich des Schieberdurchganges mit Einlaufnuten für die Rollen versehen sind. Auch die Absperrplatten weisen je vier Rollen auf, die auf den vorgenannten Betätigungsleisten laufen. Die lichte Weite zwischen den Betätigungsleisten und die Nuttiefe der Einlaufnuten sind so bemessen, daß sowohl die Absperrplatten als auch die Dichtringe der Rohrbrücke in der Schließstellung bzw. in der Offenstellung des Schiebers durch den Innenkeil bzw. die Gehäusekeile gasdicht gegen die Gehäusedichtsitze angepreßt sind, während sie außerhalb dieser beiden Schaltstellungen in einem Abstand von den Gehäusedichtsitzen geführt werden. Die vorgenannte Beschreibung der bekannten Konstruktion läßt erkennen, daß es sich um eine relativ aufwendige Konstruktion handelt. Viele einzelne Bauteile müssen hinsichtlich ihres Bewegungsablaufes aufeinander abgestimmt werden. Bei der Herstellung des bekannten Doppelplattenschiebers mit Rohrbrücke ist daher höchste Präzision gefordert. Des weiteren beinhaltet die bekannte Konstruktion eine Vielzahl von Verschleißteilen sowie Teilen, die einer gesonderten Reinigung nach vorbestimmter Gebrauchsdauer bedürfen. Zusammenfassend kann also festgehalten werden, daß bei dem bekannten Doppelplattenschieber mit Rohrbrücke gemäß DE-U-80 06 316 die Dichtringe durch mechanische Mittel (Keilmechanismus, Rollen, Einlaufnuten, Betätigungsleisten) sowie mechanische Zwangssteuerung entweder gegen die Dichtsitze des Schiebergehäuses gepreßt oder von diesen abgehoben werden, und zwar je nach Schieberstellung. Durch den vorgenannten Zwangsmechanismus ist eine Anpassung an veränderte äußere Bedingungen, insbesondere an unterschiedliche Drücke innerhalb der Rohrleitung, in welcher der Schieber eingebaut ist, nicht möglich. Des weiteren ist die bekannte Doppelplattenschieber-Konstruktion - wie bereits oben dargelegt - durch eine Vielzahl von hinsichtlich des Bewegungsablaufes aufeinander abgestimmten Bauteilen erforderlich, die sowohl einen hohen Materialaufwand als auch Fertigungs- und Montageaufwand zur Folge haben. Auch die Wartung ist dementsprechend aufwendig.

Der vorliegenden Erfindung liegt nun die Aufgabe zugrunde, einen Doppelplattenschieber der genannten Art so weiterzubilden, daß mit einer reduzierten Anzahl von Bauteilen eine unverändert hohe Dichtigkeit zwischen den Dichtringen der Rohrbrücke und den zugeordneten Dichtsitzen des Schiebergehäuses bei Schieberoffenstellung gewährleistet ist, wobei gleichzeitig eine gute Anpassung an veränderte äußere Bedingungen, insbesondere unterschiedliche Drücke im Schieberdurchgang, möglich sein sollen.

Diese Aufgabe wird erfindungsgemäß durch die kennzeichnenden Merkmale des Anspruches 1 oder 7 gelöst. Im Rahmen der erfindungsgemäßen Konstruktion wird innerhalb des Schiebergehäuses ein höherer Gasdruck eingestellt als in der Rohrleitung bzw. im Schieberdurchgang herrscht. Dieser Druck wirkt auf die umlaufende Einbuchtung bzw. auf die Dichtring- und Rohrabschnittflächen derart, daß die Dichtringe der Rohrbrücke gegen die zugeordneten Dichtsitze gepreßt wird unter entsprechender Abdichtung des Schiebergehäuses gegenüber dem Schieberdurchgang bzw. der Rohrleitung in Schieberoffenstellung. Entsprechend dem im Schieberdurchgang herrschenden Druck wird der Druck im Schiebergehäuse eingestellt. Vorzugsweise wird als Druckmedium Spüldampf verwendet, der ohnehin zur Reinigung des Schiebers vorhanden ist. Dadurch, daß das Schiebergehäuse unter gegenüber dem Schieberdurchgang bzw. der Rohrleitung erhöhtem Spüldampf-Druck steht, wird auch die Ablagerung von Schmutz oder anderen gasförmigen oder flüssigen Medien, die durch die Rohrleitung strömen, im Schiebergehäuse verhindert bzw. auf ein Minimum reduziert. Dementsprechend ist bei den erfindungsgemäßen Konstruktionen der Spüldampfverbrauch zu Reinigungszwecken minimal. Durch die vorgenannte Druckeinstellung im Schiebergehäuse ist auch stets eine hohe Dichtigkeit zwischen Rohrbrücke und Schiebergehäuse in Schieberoffenstellung gewährleistet, ohne daß zu große Reibungskräfte bei der Schieberbetätigung zu überwinden sind, und zwar dadurch bedingt, daß die axiale Spreizung der Dichtringe durch den Gasdruck im Schiebergehäuse an die äußeren Bedingungen, insbesondere den Druck innerhalb der Rohrleitung bzw. innerhalb des Schieberdurchgangs anpaßbar ist. Die Dichtwirkung des erfindungsgemäß ausgebildeten Kompensators kann noch durch eine Kompensator-Vorspannung verstärkt werden, sofern dies für einen speziellen Einsatz des Schiebers zweckmäßig sein sollte.

Vorteilhafte Details der erfindungsgemäßen Schieberkonstruktion sind in den Unteransprüchen beschrieben, auf die hiermit Bezug genommen wird.

Nachstehend werden Ausführungsformen eines erfindungsgemäß ausgebildeten Doppelplattenschiebers mit Rohrbrücke anhand der beigefügten Zeichnung näher erläutert. Es zeigen:
- Fig. 1: eine Teilansicht eines Doppelplattenschiebers mit Rohrbrücke, mit zum Teil weggebrochener Gehäusewand;
- Fig. 2: den Doppelplattenschieber gemäß Fig. 1 im Schnitt längs Linie II-II in Fig. 1;
- Fig. 3: eine Teilschnittansicht einer alternativen Ausführungsform einer Rohrbrücke;
- Fig. 4: eine Teilschnittansicht einer weiteren alternativen Ausführungsform für eine Rohrbrücke.

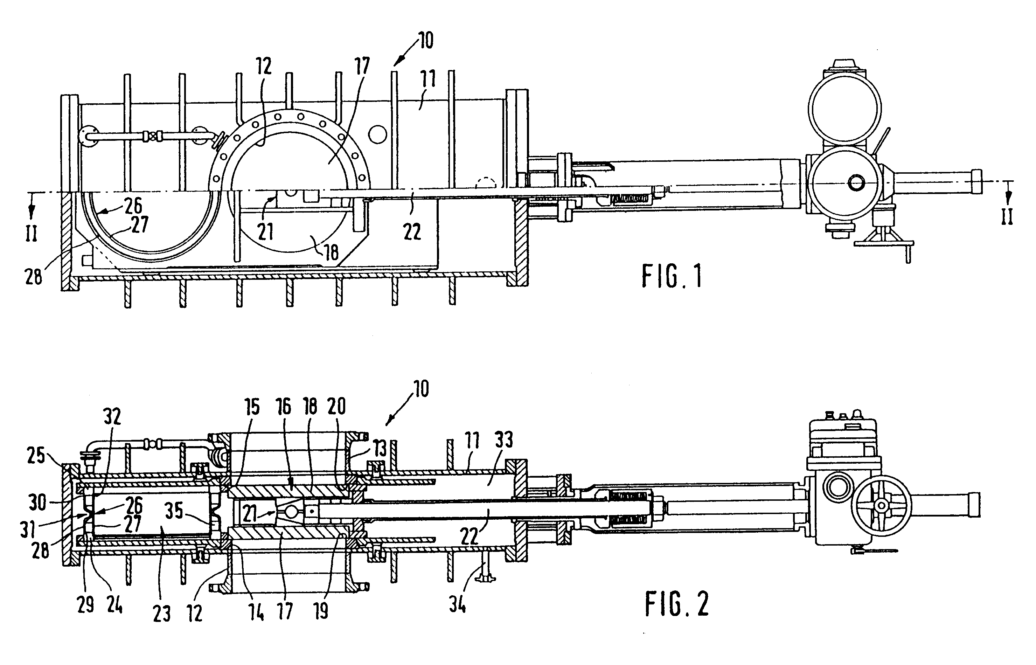

Der in den Fig. 1 und 2 dargestellte Doppelplattenschieber 10 weist ein Schiebergehäuse 11 mit zwei Rohrstutzen 12 und 13 sowie zwei Gehäusedichtsitzen 14 und 15 auf, zwischen welchen eine Schieberplatte 16, bestehend aus zwei Absperrplatten 17, 18 mit Dichtringen 19, 20, verschiebbar ist. Die beiden Absperrplatten 17 und 18 sind gegen die Gehäusedichtsitze 14 und 15 mit Hilfe eines als Spreizorgan wirkenden Innenkeils 21 andrückbar, welcher am Ende einer Betätigungsstange 22 sitzt und mit dieser fest verbunden ist. Die Absperrplatten 17 und 18 sind durch den Innenkeil 21 in an sich bekannter Weise nach dem sogenannten "Keil im Keil-Prinzip" spreizbar. Unterhalb bzw. neben der Schieberplatte 16 ist eine Rohrbrücke 23 angeordnet, die sich aus zwei Dichtringen 24, 25 sowie einem die Dichtringe miteinander verbindenden Kompensator 26 zusammensetzt. Der Kompensator 26 besteht aus einem inneren Rohrabschnitt 27 und einem sich koaxial dazu erstreckenden äußeren Rohrabschnitt 28, wobei der äußere Rohrabschnitt 28 mit beiden Dichtringen 24, 25 fest verbunden ist, nämlich verschweißt (Ringschweißnähte 29, 30) und eine sich über den Umfang erstreckende Welle bzw. Einbuchtung 31 aufweist. Der innere Rohrabschnitt 27 ist dagegen hohlzylindrisch, d. h. ohne Wellung ausgebildet, so daß keine dadurch bedingten Strömungsverluste auftreten. Des weiteren ist der innere Rohrabschnitt nur mit einem der beiden Dichtringe, nämlich hier dem Dichtring 25, fest verbunden (Ringschweißnaht 32). Gegenüber dem anderen Dichtring 24 ist der innere Rohrabschnitt 27 axial bewegbar, wobei das Axialspiel zwischen dem Dichtring 24 und dem inneren Rohrabschnitt 27 zwischen etwa 1,0 mm bis etwa 5,0 mm liegt. Die Anordnung des inneren Rohrabschnitts 26 gegenüber den beiden Dichtringen 24 und 25 ist so, daß die Innenfläche des Rohrabschnitts 26 mit den Innenflächen der Dichtringe 24 und 25 jeweils fluchtet, so daß ein praktisch ununterbrochener Strömungsdurchgang in Offenstellung des Schiebers geschaffen ist. In den Fig. 1 und 2 ist der Schieber in Schließstellung dargestellt. Das Schiebergehäuse 11 ist nach außen hin fluiddicht ausgebildet, so daß innerhalb des Schiebergehäuses bzw. im Innern 33 desselben ein Gasdruck einstellbar ist, der größer ist als der Druck im Schieberdurchgang bzw. in der in den Fig. 1 und 2 nicht dargestellten Rohrleitung bei Schieberoffenstellung. Demnach muß auch die Betätigungsstange 22 fluiddicht in das Schiebergehäuse 11 eingeführt sein. Am Schiebergehäuse 11 ist ein Anschluß 34 zur Verbindung mit einer nicht dargestellten Druckgasquelle, insbesondere Spüldampfquelle, angeordnet. Bei der in den Fig. 1 und 2 dargestellten Ausführungsform sind die Dichtflachen der Dichtringe 24, 25 einerseits und Gehäusedichtsitze 14, 15 andererseits jeweils sich parallel zur Schieberbetätigungsrichtung erstreckend ausgebildet, und zwar in an sich bekannter Weise gehärtet bzw. gepanzert, um die Verschleißfestigkeit zu erhöhen.

Des weiteren erstreckt sich die umlaufende Einbuchtung 31 des äußeren Rohrabschnitts 28 bis nahe zur Außenfläche des inneren Rohrabschnitts 27 hin, so daß der im Gehäuseinnern 33 herrschende Gasdruck über die umlaufende Einbuchtung 31 auf die Dichtringe 24, 25 unter axialer Spreizung derselben voll wirksam ist. Die axiale Spreizung der Dichtringe 24, 25 ist zum einen durch die umlaufende Einbuchtung 31 und zum anderen durch das Axialspiel zwischen dem inneren Rohrabschnitt 27 und einem der beiden Dichtringe, hier Dichtring 24, möglich.

Die Rohrbrücke 23 wird demnach durch die beiden Dichtringe 24, 25 einerseits und die zwischen diesen angeordneten, als Kompensator 26 dienenden inneren und äußeren Rohrabschnitte 27, 28 andererseits unter Ausbildung eines Ringkastens 35 begrenzt. Dieser Ringkasten 35 bzw. der Ringraum zwischen innerem und äußerem Rohrabschnitt 27 und 28 ist mit einem wärmeisolierenden Material, insbesondere Glaswolle, Steinwolle, oder dgl., ausgefüllt. Diese Ausfüllung hat nicht nur einen wärmeisolierenden Zweck, sondern auch den Zweck, das Eindringen von Strömungsmedium in den genannten Ringraum zwischen innerem und äußerem Rohrabschnitt zu verhindern. Ein Zusetzen des Ringraums mit Strömungsmedium oder bei Gasströmung mit Staub- und Schmutzpartikeln oder dgl. Ablagerungen würde nach längerem Gebrauch die Wirkung des Kompensators 26 empfindlich stören bzw. beeinträchtigen. Insofern hat die vorgenannte Ausfüllung eine Doppelfunktion.

Da alle übrigen Konstruktionsdetails des in den Fig. 1 und 2 dargestellten Doppelplattenschiebers an sich bekannt sind, erübrigt sich hier eine nähere Beschreibung dieser Teile, zumal diese ohnehin außerhalb des hier fraglichen Erfindungsgedankens liegen.

Grundsätzlich ist es noch denkbar, dem Schiebergehäuse 11 bzw. dem Innenraum 33 desselben ein einstellbares Druckbegrenzungsventil zuzuordnen, um einen vorbestimmten Druck im Innern 33 des Schiebergehäuses 11 nicht zu übersteigen, wobei dieser Druck so eingestellt ist, daß er eine ausreichend hohe Dichtsicherheit zwischen den Dichtringen 24, 25 einerseits und den zugeordneten Gehäusedichtsitzen 14, 15 des Schiebergehäuses andererseits bei Schieberoffenstellung gewährleistet.

Bei der dargestellten Ausführungsform ist im übrigen auch noch zu bedenken, daß im Ringraum zwischen innerem und äußerem Rohrabschnitt in der Praxis ein etwas geringerer Druck herrschen wird als im Schieberdurchgang bzw. in der Rohrleitung, und zwar bedingt durch die Drosselstelle im Axialspielbereich zwischen dem Dichtring 24 und dem inneren Rohrabschnitt 27 und/oder bei etwas höherer Strömungsgeschwindigkeit im Schieberdurchgang bzw. in der Rohrleitung, bedingt durch den dabei entstehenden "Wasserpumpen-Effekt" . Die Folge ist, daß der im Innern 33 des Schiebergehäuses 11 herrschende Überdruck noch wirksamer auf die beiden Dichtringe 24, 25 unter axialer Spreizung derselben einwirken kann.

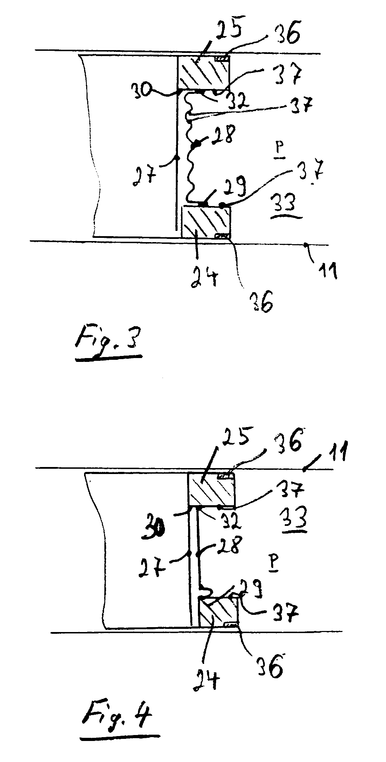

In den Fig. 3 und 4 sind noch Abwandlungen der Erfindung entsprechend Anspruch 7 im schematischen Teilschnitt dargestellt, wobei jeweils mit der Bezugsziffer 27 der innere Rohrabschnitt, mit 28 der äußere Rohrabschnitt, mit 24,25 die beiden Dichtringe, mit 33 das unter Gasüberdruck stehende Innere des Schiebergehäuses 11, mit 36 ringförmige Einsätze aus Panzerstahl oder dgl. sowie mit 29,30,32 Ringschweißnähte bezeichnet sind. Die schiebergehäuseseitig axial einander zugewandten Flächen von Dichtringen sowie äußerem Rohrabschnitt (Fig. 3) sind mit dem Bezugszeichen 37 gekennzeichnet. Diese sind bei Überdruck im Schiebergehäuse 33 wirksam derart, daß eine axiale Spreizung des äußeren Rohrabschnitts 28 unter Abdichtung im Bereich der Ringeinsätze 36 erfolgt. Bei der Ausführungsform nach Fig. 4 erfolgt die abdichtende Verbindung zwischen dem äußeren, glatten Rohrabschnitt und dem unteren Dichtring 24 über einen Ringwulst, der eine axiale Relativbewegung zwischen den beiden Dichtringen 24, 25 unter den vorbeschriebenen Bedingungen erlaubt.

## Patentansprüche

1. Doppelplattenschieber, dessen Schieberplatte (16) durch eine Betätigungsstange (22) verschiebbar ist und mit einer Rohrbrücke (23) versehen ist, welche zwei durch einen Kompensator (26) miteinander verbundene Dichtringe (24, 25) aufweist, die in der Offenstellung des Schiebers (10) unter elastischer Vorspannung gegen die Dichtsitze (14, 15) des Schiebergehäuses (11) preßbar sind, wobei der Kompensator (26) zwischen den beiden Dichtringen (24, 25) fluiddicht ausgebildet ist und einen wellig gebogenen sowie elastisch nachgiebigen Rohrabschnitt mit einer sich über den Umfang erstreckenden Einbuchtung (31) umfaßt,
**dadurch gekennzeichnet,**
daß der wellig gebogene Rohrabschnitt als äußerer Rohrabschnitt (28) sich koaxial über einen inneren Rohrabschnitt (27) erstreckt, der nur mit einem (25) der beiden Dichtringe (24, 25) fest verbunden ist, während er gegenüber dem anderen Dichtring (24) axial beweglich ist, und daß im Inneren (33) des Schiebergehäuses (11) ein zur Anpressung der Dichtringe (24, 25) dienender Gasdruck einstellbar ist, der größer ist als der Druck im Schieberdurchgang bei Schieberoffenstellung.

2. Schieber nach Anspruch 1,
**dadurch gekennzeichnet,**
daß der Ringraum (35) zwischen innerem (27) und äußerem (28) Rohrabschnitt mit einem wärmeisolierenden Material, insbesondere Glaswolle, Steinwolle oder dgl., ausgefüllt ist.

3. Schieber nach Anspruch 1 oder 2,
**dadurch gekennzeichnet,**
daß die Betätigungsstange (22) fluiddicht in das Schiebergehäuse (11) eingeführt ist, und daß am Schiebergehäuse (11) ein Anschluß (34) zur Verbindung mit einer Druckgasquelle, insbesondere Spüldampfquelle, angeordnet ist.

4. Schieber nach einem der Ansprüche 1 bis 3,
**dadurch gekennzeichnet,**
daß die Dichtflächen der Dichtringe (24, 25) einerseits und der zugeordneten Gehäusedichtsitze (14, 15) andererseits sich jeweils parallel zur Schieberbetätigungsrichtung bzw. sich senkrecht zur Schieberdurchgangs-Längsachse erstreckend ausgebildet sind.

5. Schieber nach einem der Ansprüche 1 bis 4,
**dadurch gekennzeichnet,**
daß die umlaufende Einbuchtung (31) des äußeren Rohrabschnitts (28) sich bis nahe zur Außenfläche des inneren Rohrabschnitts (27) hin erstreckt.

6. Schieber nach einem der Ansprüche 1 bis 5,
**dadurch gekennzeichnet,**
daß die Rohrbrücke (23) durch die beiden Dichtringe (24, 25) einerseits und die zwischen diesen angeordneten, als Kompensator (26) dienenden inneren und äußeren Rohrabschnitte (27, 28) andererseits begrenzt sind, wobei die Innenfläche des inneren Rohrabschnitts (27) mit den Innenflächen der beiden Dichtringe (24, 25) fluchtet bzw. mit diesen bündig ausgebildet ist.

7. Doppelplattenschieber, dessen Schieberplatte (16) durch eine Betätigungsstange (22) verschiebbar ist und mit einer Rohrbrücke (23) versehen ist, welche zwei durch einen Kompensator (26) miteinander verbundene Dichtringe (24, 25) aufweist, die in der Offenstellung des Schiebers (10) unter elastischer Vorspannung gegen die Dichtsitze (14, 15) des Schiebergehäuses (11) preßbar sind, wobei der Kompensator (26) zwischen den beiden Dichtringen (24, 25) fluiddicht ausgebildet ist und einen Rohrabschnitt umfaßt, der in axialer Richtung elastisch nachgiebig ist,
**dadurch gekennzeichnet,**
daß der elastisch nachgiebig ausgebildete Rohrabschnitt als äußerer Rohrabschnitt (28) sich koaxial über einen inneren Rohrabschnitt (27) erstreckt, der nur mit einem (25) der beiden Dichtringe (24, 25) fest verbunden ist, während er gegenüber dem anderen Dichtring (24) axial beweglich ist, wobei die Summe der in Axialrichtung des Rohrabschnitts einander zugewandten Flächen (37), von Dichtringen (24, 25) und äußerem Rohrabschnitt (28) größer ist als die Summe der in Axialrichtung des Rohrabschnitts voneinander abgewandten Flächen und daß im Inneren (33) des Schiebergehäuses (11) ein zur Anpressung der Dichtringe (24, 25) dienender Gasdruck einstellbar ist, der größer ist als der Druck im Schieberdurchgang bei Schieberoffenstellung.

8. Schieber nach einem der Ansprüche 1 bis 7,
**dadurch gekennzeichnet,**
daß die Dichtflächen der beiden Dichtringe (24, 25) jeweils längs des äußeren Umfangs derselben ausgebildet bzw. wirksam sind.

9. Schieber nach Anspruch 8,
**dadurch gekennzeichnet,**
daß die Dichtflächen der Dichtring (24, 25) durch sich längs des äußeren Umfangs derselben erstreckende bzw. ringförmige Einsätze (35) aus gehärtetem Stahl, insbesondere Panzerstahl, gebildet sind.

## Claims

1. A double-plate slide valve comprising a slide plate (16) which can be displaced by virtue of an actuating rod (22) and is provided with a tube bridge (23) which comprises two sealing rings (24, 25) which are interconnected by virtue of a compensator (26), which sealing rings can be pressed whilst being elastically prestressed against the sealing ring seat (14, 15) of the slide valve housing (11) when the slide valve (10) is in the open position, wherein the compensator (26) is formed in a fluid-tight manner between the two sealing rings (24, 25) and includes an elastically resilient tube portion which is curved in a wave-like manner and includes a recess (31) which extends over the periphery, characterised in that the wave-like curved tube portion extends as the outer tube portion (28) in a coaxial manner over an inner tube portion (27) which is fixedly connected to only one (25) of the two sealing rings (24, 25), whereas it can move in an axial direction with respect to the other sealing ring (24) and that in the inside (33) of the slide valve housing (11) a gas pressure, which serves to press down the sealing rings (24, 25), can be adjusted, which gas pressure is greater than the pressure in the slide valve through passage when the slide valve is in the open position.

2. A slide valve according to claim 1, characterised in that the annular chamber (35) between the inner (27) and the outer (28) tube portion is filled with a heat-insulation material, in particular glass wool, rock wool etc.

3. A slide valve according to claim 1 or 2, characterised in that the actuating rod (22) is guided into the slide valve housing (11) in a fluid-tight manner and that for the purpose of connecting a pressure gas source, in particular a scavenging steam source, a connection (34) is disposed on the slide valve housing (11).

4. A slide valve according to any one of claims 1 to 3, characterised in that the sealing surfaces of the sealing rings (24, 25) on the one hand and of the associated housing sealing ring seats (14, 15) on the other hand extend in each case parallel with the slide actuating direction and perpendicular to the slide valve through passage longitudinal axis.

5. A slide valve according to any one of claims 1 to 4, characterised in that the circumferential recess (31) of the outer tube portion (28) extends approximately to the outer surface of the inner tube portion (27).

6. A slide valve according to any one of claims 1 to 5, characterised in that the tube bridge (23) is defined on the one side by the two sealing rings (24, 25) and on the other side by the inner and outer tube portions (27, 28) which are disposed between the said sealing rings and serve as a compensator (26), wherein the inner surface of the inner tube portion (27) is aligned and flush with the inner surfaces of the two sealing rings (24, 25).

7. A double-plate slide valve comprising a slide plate (16) which can be displaced by virtue of an actuating rod (22) and is provided with a tube bridge (23) which comprises two sealing rings (24, 25) which are interconnected by virtue of a compensator (26), which sealing rings can be pressed whilst being elastically prestressed against the sealing ring seat (14, 15) of the slide valve housing (11) when the slide valve (10) is in the open position, wherein the compensator (26) is formed in a fluid-tight manner between the two sealing rings (24, 25) and includes a tube portion which is elastically resilient in the axial direction, characterised in that the elastically resilient tube portion extends as the outer tube portion (28) in a coaxial manner over an inner tube portion (27), which is fixedly connected to only one (25) of the two sealing rings (24, 25) whereas it can move in an axial direction with respect to the other sealing ring (24), wherein the total of the surfaces facing each other in an axial direction of the tube portion and of the sealing rings (24, 25) and outer tube portion (28) is greater than the total of the surfaces facing away from each other in the axial direction of the tube portion and that in the inside (33) of the slide valve housing (11) a gas pressure, which serves to press down the sealing rings (24, 25) can be adjusted, which gas pressure is greater than the pressure in the slide valve through passage when the slide valve is in the open position.

8. A slide valve according to any claims 1 to 7, characterised in that the sealing surfaces of the two sealing rings (24, 25) are formed or rather are effective in each case along the outer periphery thereof.

9. A slide valve according to claim 8, characterised in that the sealing surfaces of the sealing ring (24, 25) are formed by virtue of inserts (35) which extend along the outer periphery thereof and are made of hardened steel.

## Revendications

1. Robinet-vanne à double opercule dont l'obturateur (16) est mû par une tige de manoeuvre (22) et pourvu d' un pont tubulaire (23) qui présente deux joints annulaires d' étanchéité (24, 25) réunis par un compensateur (26) qui, lorsque le robinet (10) est ouvert , peuvent être serrés avec précontrainte élastique contre les sièges (14, 15) du corps (11) du robinet, le compensateur (26) étant étanche aux fluides entre les deux joints annulaires (24, 25) et comprenant un morceau de tube ondulé et flexible élastiquement ayant un creux (31) s'étendant sur sa circonférence, caractérisé par le fait que le morceau de tube ondulé s'étend comme morceau de tube extérieur (28) coaxialement par-dessus un morceau de tube intérieur (27) qui est fixé à un seul (25) des deux joints annulaires (24, 25) et est mobile axialement par rapport à l'autre joint annulaire (24), et que dans l'espace intérieur (33) du corps (11) du robinet peut être établie une pression de gaz servant à serrer les joints annulaires (24, 25) qui est supérieure à la pression dans le passage du robinet lorsque ce dernier est ouvert.

2. Robinet-vanne selon la revendication 1, caractérisé par le fait que l'espace annulaire (35) entre le morceau de tube intérieur (27) et le morceau de tube extérieur (28) est rempli d'un isolant thermique, en particulier de laine de verre, de laine de roche ou de matière semblable.

3. Robinet-vanne selon l'une des revendications 1 et 2, caractérisé par le fait que la tige de manoeuvre (22) entre avec étanchéité aux fluides dans le corps (11) du robinet et que sur ce corps (11) est prévu un raccord (34) pour le raccordement à une source de gaz sous pression, en particulier une source de vapeur de balayage.

4. Robinet-vanne selon l'une des revendications 1 à 3, caractérisé par le fait que les faces de contact d'une part des joints annulaires (24, 25) et d'autre part des sièges associés (14, 15) du corps sont parallèles à la direction de manoeuvre du robinet et perpendiculaires à l'axe longitudinal du passage du robinet.

5. Robinet-vanne selon l'une des revendications 1 à 4, caractérisé par le fait que le creux circonférentiel (31) du morceau de tube extérieur (28) s'étend jusqu'à proximité de la face extérieure du morceau de tube intérieur (27).

6. Robinet-vanne selon l'une des revendications 1 à 5, caractérisé par le fait que le pont tubulaire (23) est délimité d'une part par les deux joints annulaires (24, 25) et d'autre part par les morceaux de tube intérieur et extérieur (27, 28) servant de compensateur (26) placés entre ceux-ci, la face intérieure du morceau de tube intérieur (27) étant alignée avec les faces intérieures des deux joints annulaires (24, 25), ou affleurant celles-ci.

7. Robinet-vanne a double opercule dont t'obturateur (16) est mû par une tige de manoeuvre (22) et pourvu d'un pont tubulaire (23) qui présente deux joints annulaires d'étanchéité (24, 25) réunis par un compensateur (26) qui, lorsque le robinet (10) est ouvert, peuvent être serrés avec précontrainte élastique contre les sièges (14, 15) du corps (11) du robinet, le compensateur (26) étant étanche aux fluides entre les deux joints annulaires (24, 25) et comprenant un morceau de tube qui est flexible élastiquement dans la direction axiale, caractérisé par le fait que le morceau de tube flexible élastiquement s'étend comme morceau de tube extérieur (28) coaxialement par-dessus un morceau de tube intérieur (27) qui est fixé à un seul (25) des deux joints annulaires (24, 25) et est mobile axialement par rapport à l'autre joint annulaire (24), la somme des surfaces (37) en regard dans la direction axiale du morceau de tube des joints annulaires (24, 25) et du morceau de tube extérieur (28) étant supérieure à la somme des surfaces opposées dans la même direction, et que dans l'espace intérieur (33) du corps (11) du robinet peut être établie une pression de gaz servant à serrer les joints annulaires (24, 25) qui est supérieure à la pression dans le passage du robinet lorsque ce dernier est ouvert.

8. Robinet-vanne selon l'une des revendications 1 à 7, caractérisé par le fait que les faces de contact des deux joints annulaires (24, 25) sont faites ou agissent le long du pourtour extérieur de ceux-ci.

9. Robinet-vanne selon la revendication 8, caractérisé par le fait que les faces de contact des joints annulaires (24, 25) sont formées par des mises annulaires (35), s'étendant le long du pourtour extérieur de ceux-ci, en acier trempé, en particulier en acier blindé.
